# EUROPEAN PATENT APPLICATION

(11) **EP 3 575 114 A1**
(43) Date of publication of application: **04.12.2019**
(21) Application number: 19175335.9
(22) Date of filing: 20.05.2019
(51) Int. Cl.: B60H 1/00

(54) **VEHICLE AIR CONDITIONER**

(30) Priority: 01.06.2018 JP 2018106283
(71) Applicant: Valeo Japan Co., Ltd., Kumagaya-shi, Saitama 360-0193 (JP)
(72) Inventor: ARAKI, Daisuke, SAITAMA, 360-0193 (JP); SAKURAI, Yusaku, SAITAMA, 360-0193 (JP)
(74) Representative: Metz, Gaëlle

(57) **Abstract**

An interior condenser (10) includes a first heat-transfer-medium flow passage group (11), a second heat-transfer-medium flow passage group (12) , a lower header tank (14), an upper header tank (13), a heat-transfer-medium inflow port (15), and a heat-transfer-medium outflow port (17). The first heat-transfer-medium flow passage group (11) and the second heat-transfer-medium flow passage group (12) respectively have flow passages for a heat transfer medium. The flow passages are mutually stacked in a left-right direction of a vehicle and each extend in an up-down direction. The lower header tank (14) is joined to lower ends of the first heat-transfer-medium flow passage group (11) and the second heat-transfer-medium flow passage group (12) and has an inside that is divided into multiple areas (14a, 14ab, 14b 14bb). The multiple areas (14a, 14ab, 14b 14bb) include at least a first area (14a) that communicates with the first heat-transfer-medium flow passage group (11) and a third area (14b) that communicates with the second heat-transfer-medium flow passage group (12). The upper header tank (13) is joined to upper ends of the first heat-transfer-medium flow passage group (11) and the second heat-transfer-medium flow passage group (12). The heat-transfer-medium inflow port (15) and the heat-transfer-medium outflow port (17) are provided at a lower part of one side in the left-right direction of the interior condenser (10).

## Description

### BACKGROUND OF THE INVENTION

### 1. Field of the Invention

The present invention relates to a vehicle air conditioner.

### 2. Description of the Related Art

A vehicle air conditioner having multiple movable doors at an inside is publicly known. Such a conventional apparatus is disclosed in Patent Literature 1. In such an air conditioner, the movable door is moved to change a flow of air that flows in an air conditioning case, whereby the state of the air conditioner such as an operation mode is changed. The movable door is driven by a driving mechanism that is arranged on a side surface of the air conditioning case.

The air conditioning case houses heat exchangers that cool and heat the air flowing in the air conditioning case. The heat exchangers each are connected to an inflow pipe for letting a refrigerant flow thereinto and an outflow pipe for letting the refrigerant flow out therefrom. One heat exchanger is disclosed in Patent Literature 2, for example. These pipes extend out from the side surface of the air conditioning case and are arranged so as to extend along the side surface. This limits a space for arranging the driving mechanism on the side surface of the air conditioning case.

On the other hand, it is desired to drive the multiple movable doors by one driving mechanism in consideration of, for example, manufacturing the air conditioner at a low cost. Thus, the driving mechanism tends to be made large. Moreover, recently, it is also desired to provide a large number of movable doors in the air conditioner, in order to operate the air conditioner in various operation modes . This arises a need to provide a large number of driving mechanisms in the air conditioner. The driving mechanism should be arranged at an appropriate position of the side surface of the air conditioning case, corresponding to position of the movable door to be driven by that driving mechanism. For this reason, it is necessary to obtain a wide space for arranging the driving mechanism on the side surface of the air conditioning case, thereby increasing a degree of freedom of arranging the driving mechanism.

In view of these circumstances, it is desired to materialize an air conditioner with a wide space for arranging the driving mechanism on the side surface of the air conditioning case, thereby having a high degree of freedom of arranging the driving mechanism.
Patent Literature 1 : JP-A-2014-152849
Patent Literature 2 : JP-A-2012-153356

### SUMMARY OF THE INVENTION

An object of the invention is to provide an air conditioner with a wide space for arranging a driving mechanism on a side surface of an air conditioning case, thereby having a high degree of freedom of arranging the driving mechanism.

A preferred embodiment of the invention provides an air conditioner for a vehicle. The air conditioner includes:
an air conditioning case that forms an air passage through which air flows,
an interior condenser disposed in the air passage so as to form an upper diversion on an upper side,
doors disposed in the air passage to change the flow of the air passing through the air passage, and
a driving mechanism disposed on one side surface of the air conditioning case in a left-right direction of the vehicle to drive one or more of the doors.

The interior condenser includes:
a first heat-transfer-medium flow passage group having multiple flow passages for a heat transfer medium, and the flow passages mutually stacked in the left-right direction of the vehicle and respectively extending in an up-down direction,
a second heat-transfer-medium flow passage group having multiple flow passages for the heat transfer medium and disposed on an upstream side of the first heat-transfer-medium flow passage group in a flow direction of the air, and the flow passages mutually stacked in the left-right direction of the vehicle and respectively extending in the up-down direction,
a lower header tank joined to lower end parts of the first heat-transfer-medium flow passage group and the second heat-transfer-medium flow passage group and having an inside that is divided by a partition wall into multiple areas, and the areas including at least a first area that communicates with the first heat-transfer-medium flow passage group and a third area that communicates with the second heat-transfer-medium flow passage group,
an upper header tank joined to upper end parts of the first heat-transfer-medium flow passage group and the second heat-transfer-medium flow passage group and having an inside used as a second area that communicates with the first heat-transfer-medium flow passage group and the second heat-transfer-medium flow passage group,
a heat-transfer-medium inflow port that supplies the heat transfer medium to the first area, and
a heat-transfer-medium outflow port from which the heat transfer medium collected to the third area flows out.

The heat-transfer-medium inflow port and the heat-transfer-medium outflow port are provided at a lower part of one side of the interior condenser.

This embodiment of the invention provides an air conditioner with a wide space for arranging a driving mechanism on a side surface of an air conditioning case, thereby having a high degree of freedom of arranging the driving mechanism.

### BRIEF DESCRIPTION OF THE DRAWINGS

Fig. 1 shows a heat transfer medium circuit having a vehicle air conditioner relating to an embodiment of the invention.
Fig. 2 schematically shows a structure of the air conditioner in Fig. 1 and is a plan view as viewed from above the air conditioner.
Fig. 3 is a sectional view of the air conditioner taken along a line I-I in Fig. 2.
Fig. 4 is a side view showing a part of one side surface of the air conditioner in Fig. 2.
Fig. 5 shows an interior condenser of the air conditioner in Fig. 2 as viewed from a downstream side.
Fig. 6 is a view showing one side surface of the interior condenser in Fig. 5.
Fig. 7 is a sectional view of the interior condenser taken along a line II-II in Fig. 5.
Fig. 8 is a perspective view schematically showing flows of a heat transfer medium inside the interior condenser in Fig. 5.
Fig. 9 is a view for explaining a modification example of the air conditioner in Fig. 2 and is a view showing one side surface of the air conditioner of the modification example.
Fig. 10 is a view for explaining another modification example of the air conditioner in Fig. 2 and is a plan view as viewed from above the air conditioner of the modification example.
Fig. 11 is a sectional view at a center in an up-down direction of the air conditioner in Fig. 10.
Fig. 12 is a side view showing one side surface of the air conditioner in Fig. 10.
Fig. 13 is a perspective view of a modification example of the interior condenser in Figs. 5 to 8.
Fig. 14 is a perspective view of another modification example of the interior condenser in Figs. 5 to 8.
Fig. 15 shows one side surface of an air conditioner having a pipe at each of an upper end part and a lower end part of an interior condenser.
Fig. 16 shows one side surface of the air conditioner having the pipe at each of the upper end part and the lower end part of the interior condenser.

### DESCRIPTION OF THE PREFERRED EMBODIMENTS

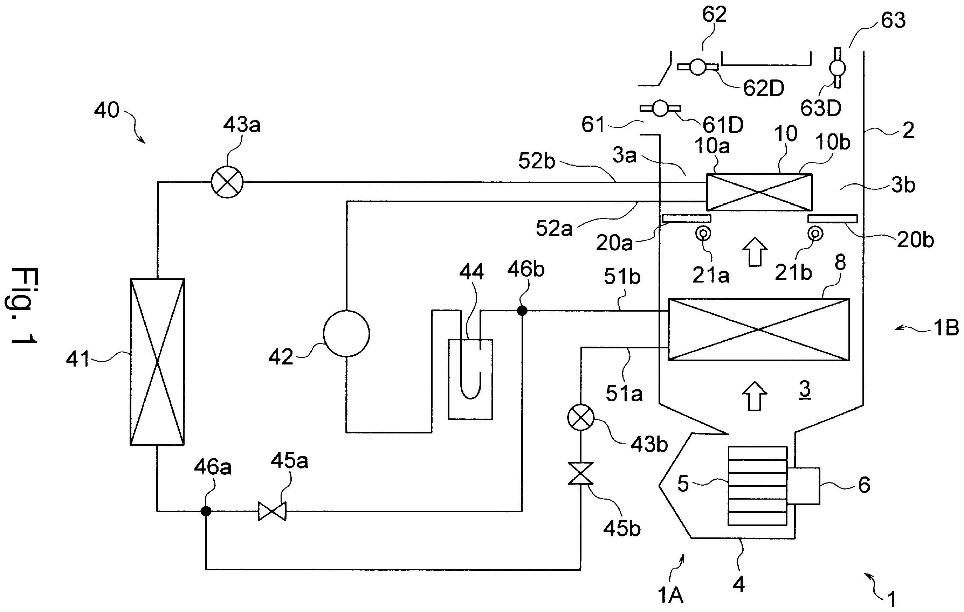

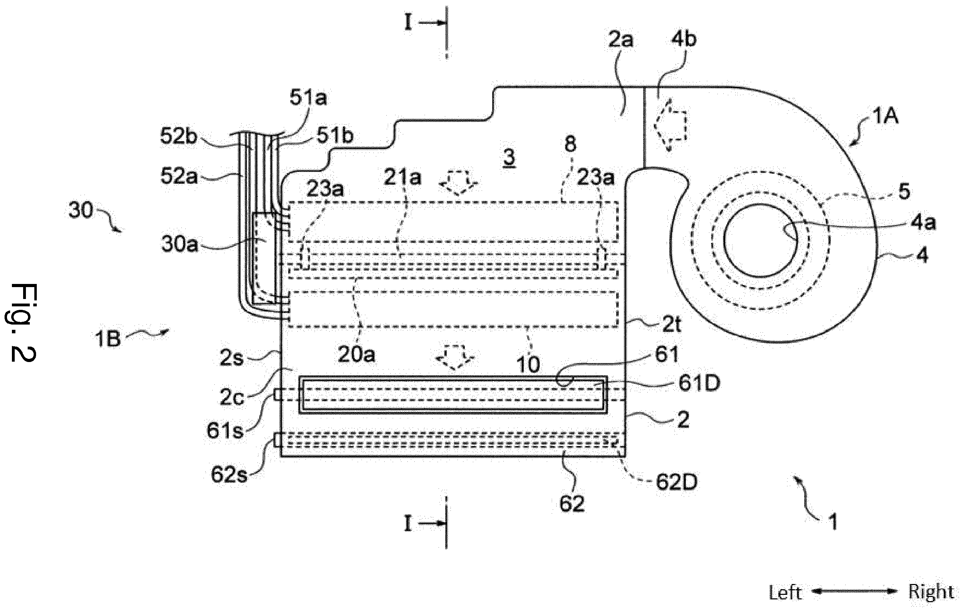

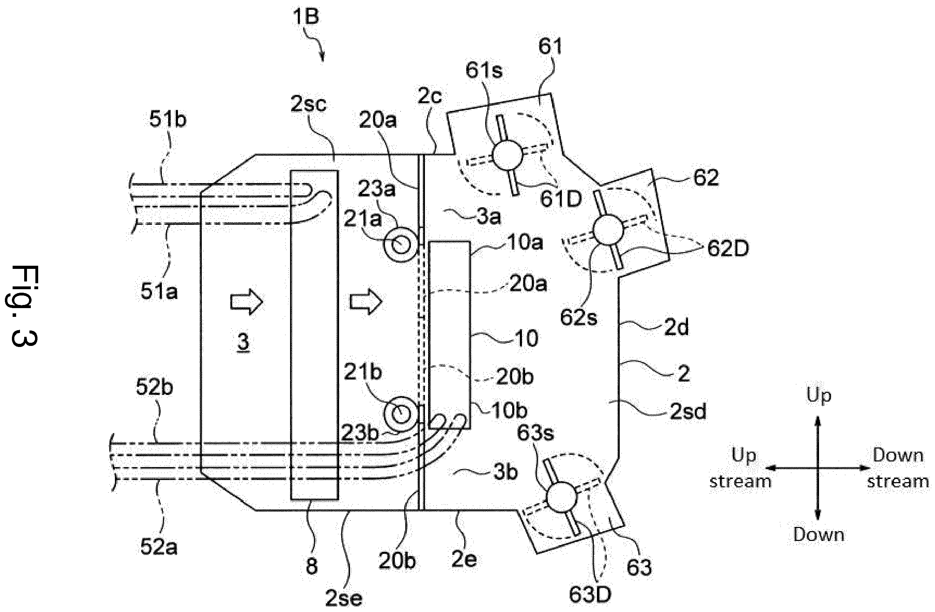

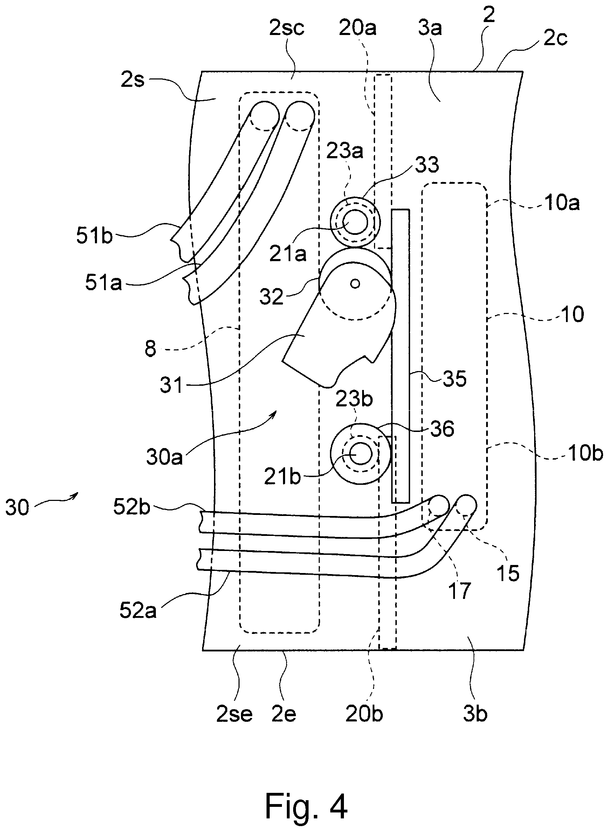

An embodiment of a vehicle air conditioner of the invention will be described with reference to Figs. 1 to 4, hereinafter. Fig. 1 shows a heat transfer medium circuit having the vehicle air conditioner relating to this embodiment. Fig. 2 schematically shows a structure of the air conditioner in Fig. 1 and is a plan view as viewed from above the air conditioner. Fig. 3 is a sectional view of the air conditioner taken along a line I-I in Fig. 2. Fig. 4 is a side view showing a part of one side surface of the air conditioner in Fig. 1.

Figs. 1 and 2 show a vehicle air conditioner 1 including a blower 1A and an air conditioning unit 1B that is connected to the blower 1A. The blower 1A sends air to the air conditioning unit 1B. The air conditioning unit 1B is used for, for example, adjusting temperature of the air sent from the blower 1A.

In this specification, unless otherwise specified, the words and the phrases: "left", "right", "left-right direction", "up", "down", and "up-down direction", represent the directions relative to a passenger on a seat in an interior of a vehicle equipped with the air conditioner 1. In addition, this specification uses words: "upstream side" and "downstream side" for each component of the air conditioner 1, which represent sides relative to a flow direction of the air flowing in the air conditioner 1, unless otherwise specified. The drawings show the flow direction of the air flowing in the air conditioner 1 by white arrows.

First, the blower 1A is described with reference to Figs . 1 and 2. The blower 1A shown in Figs. 1 and 2 is a single suction centrifugal blower. The blower 1A includes a scroll housing 4 and an impeller 5 that is contained in the scroll housing 4. The impeller 5 is rotationally driven by an electric rotary motor 6, thereby taking in one or both of outside air and inside air of the vehicle interior, to a space on a radially inner side of a blade lattice of the impeller 5 via an opening 4a of the scroll housing 4 and blowing out the intake air in a centrifugal direction. The scroll housing 4 includes a delivery port 4b that delivers the air flowing in the scroll housing 4 to the air conditioning unit 1B.

Next, the air conditioning unit 1B is described with reference to Figs. 1 to 3. The air conditioning unit 1B includes an air conditioning case 2 that forms an air passage 3 through which air flows. The air conditioning case 2 has a connection port 2a that is formed at an upstream side end part. The connection port 2a is connected to the delivery port 4b of the blower 1A, thereby letting the air, which is sent from the blower 1A, flow into the air passage 3 of the air conditioning case 2. The air conditioning case 2 also has multiple air outlets 61, 62, and 63 that are formed at a downstream side end part. The air outlets 61, 62, and 63 let the air, which flows in the air passage 3, flow out.

The air conditioner 1 shown in the drawings has the blower 1A that is disposed on a side facing a right side surface 2t of the air conditioning case 2, as shown in Fig. 2.

The multiple air outlets of the air conditioning case 2 include a first air outlet 61, a second air outlet 62, and a third air outlet 63. As shown in Fig. 3, the first air outlet 61 is provided on a top surface 2c of the air conditioning case 2. The first air outlet 61 has a downstream end that is connected to a defroster outlet (not shown) that blows out air toward an inner surface of a windscreen in the vehicle interior. The second air outlet 62 is provided on an upper part of a downstream side end surface 2d of the air conditioning case 2. The second air outlet 62 has a downstream end that is connected to a vent outlet (not shown) that blows out air toward an upper half of a passenger on a driver seat or a passenger seat, or in some cases, a rear seat. The third air outlet 63 is provided on a lower part of the downstream side end surface 2d of the air conditioning case 2. The third air outlet 63 has a downstream end that is connected to a foot outlet (not shown) that blows out air toward feet of a passenger on a driver seat or a passenger seat, or in some cases, a rear seat.

The air passage 3 of the air conditioning case 2 is provided with an evaporator 8, an interior condenser 10, and various doors that change flows of the air passing through the air passage 3. The doors include air mix doors 20a and 20b and air outlet doors 61D, 62D, and 63D. The air conditioning case 2 includes a driving mechanism 30 that is provided on a side surface in the left-right direction to drive the doors 20a, 20b, 61D, 62D, and 63D. In the illustrated example, the driving mechanism 30 includes an air mix door driving mechanism 30a for driving the air mix doors 20a and 20b and includes an air outlet door driving mechanism (not shown) for driving the air outlet doors 61D, 62D, and 63D.

The evaporator 8 is provided to make all the air, which flows into the air conditioning case 2, pass therethrough. The evaporator 8 absorbs heat from the air passing therethrough and condenses moisture in high-humidity air, thereby lowering the humidity of the air.

The interior condenser 10 is disposed in the air passage 3, which is formed by the air conditioning case 2, so as to form an upper diversion 3a on an upper side. In the illustrated example, the interior condenser 10 is disposed at a center in the up-down direction of the air passage 3 so as to form a lower diversion 3b on a lower side.

The air mix doors 20a and 20b are provided between the evaporator 8 and the interior condenser 10. In the illustrated example, the air mix doors 20a and 20b are plate-shaped members and are arranged approximately in parallel to an upstream side surface of the interior condenser 10. The air mix doors 20a and 20b are respectively provided in an upper part and a lower part of the air passage 3 and adjust degrees of openings of the upper diversion 3a and the lower diversion 3b, respectively. The following also refers to the air mix door 20a, which is disposed in the upper part of the air passage 3, as an "upper air mix door 20a" and also refers to the air mix door 20b, which is disposed in the lower part of the air passage 3, as a "lower air mix door 20b".

The upper air mix door 20a is slidable along the up-down direction in the upper part of the air passage 3. The upper air mix door 20a adjusts a ratio of air flowing toward an upper part 10a of the interior condenser 10 and air flowing toward the upper diversion 3a, depending on its position. The lower air mix door 20b is slidable along the up-down direction in the lower part of the air passage 3. The lower air mix door 20b adjusts a ratio of air flowing toward a lower part 10b of the interior condenser 10 and air flowing toward the lower diversion 3b, depending on its position.

As shown in Fig. 3, the upper air mix door 20a and the lower air mix door 20b are respectively connected to shafts 21a and 21b that extend along the left-right direction in the air passage 3. Thus, the upper air mix door 20a and the lower air mix door 20b are respectively slidable along the up-down direction in the upper part and in the lower part of the air passage 3 in accordance with rotation of the shafts 21a and 21b. More specifically, one surface of each of the air mix doors 20a and 20b is provided with a rack (not shown) from an upper edge to a lower edge of the surface. The shafts 21a and 21b have outer circumferential surfaces that are respectively provided with pinions 23a and 23b for engaging with the racks. When the shafts 21a and 21b are rotated in circumferential directions, the rotation movements of the shafts 21a and 21b are converted into up-down movements by the pinions 23a and 23b and the racks, whereby the air mix doors 20a and 20b are slid in the up-down direction. The following also refers to the shaft 21a, which is connected to the upper air mix door 20a, as an "upper shaft 21a" and also refers to the shaft 21b, which is connected to the lower air mix door 20b, as a "lower shaft 21b".

As shown in Fig. 2, each of the shafts 21a and 21b is connected to the air mix door driving mechanism 30a at one end part and is thereby rotationally driven. In the illustrated example, the air conditioning case 2 includes the blower 1A on a right side. Thus, the air mix door driving mechanism 30a is disposed on a left side of the air conditioning case 2 to enable easy assembling. In response to this, left end parts of the shafts 21a and 21b of the air mix doors 20a and 20b extend out from a left side surface 2s of the air conditioning case 2. In these conditions, the air mix door driving mechanism 30a is connected to the left end parts of the shafts 21a and 21b outside the air conditioning case 2.

In the illustrated example, as shown in Fig. 4, the air mix door driving mechanism 30a includes an actuator 31, a driving pinion 32, and an upper driven pinion 33. The actuator 31 generates a rotational driving force. The driving pinion 32 is rotationally driven by the actuator 31. The upper driven pinion 33 meshes with the driving pinion 32. The upper driven pinion 33 receives the rotational driving force of the actuator 31 via the driving pinion 32. The upper driven pinion 33 is fitted to the left end part of the upper shaft 21a, which protrudes from the left side surface 2s of the air conditioning case 2, and transmits the rotational driving force of the actuator 31 to the upper shaft 21a.

The air mix door driving mechanism 30a also includes a rack 35 that extends approximately in the up-down direction and includes a lower driven pinion 36 that meshes with the rack 35. The lower driven pinion 36 is fitted to the left end part of the lower shaft 21b, which protrudes from the left side surface 2s of the air conditioning case 2. The rack 35 meshes with the driving pinion 32 at an upper part and meshes with the lower driven pinion 36 at a lower part. The rack 35 that meshes with the driving pinion 32 receives the rotational driving force of the actuator 31 via the driving pinion 32. As a result, the rack 35 linearly moves approximately in the up-down direction in accordance with the rotation of the driving pinion 32. The rack 35 that also meshes with the lower driven pinion 36 transmits the rotational driving force of the actuator 31 to the lower driven pinion 36. Thus, the rotational driving force of the actuator 31 is transmitted to the lower shaft 21b via the driving pinion 32, the rack 35, and the lower driven pinion 36.

As shown in Fig. 3, the air outlet doors 61D, 62D, and 63D are respectively provided to the air outlets 61, 62, and 63 to open and close the corresponding air outlets 61, 62, and 63. In the illustrated example, the air outlet doors 61D, 62D, and 63D are plate-shaped members and respectively extend from shafts 61s, 62s, and 63s that extend in the left-right direction. The air outlet doors 61D, 62D, and 63D are rotated around rotation axes of the corresponding shafts 61s, 62s, and 63s in response to circumferential rotation of the shafts 61s, 62s, and 63s, thereby opening and closing the corresponding air outlets 61, 62, and 63. The shafts 61s, 62s, and 63s are also connected to a driving mechanism (not shown) at left end parts and are rotationally driven by this driving mechanism.

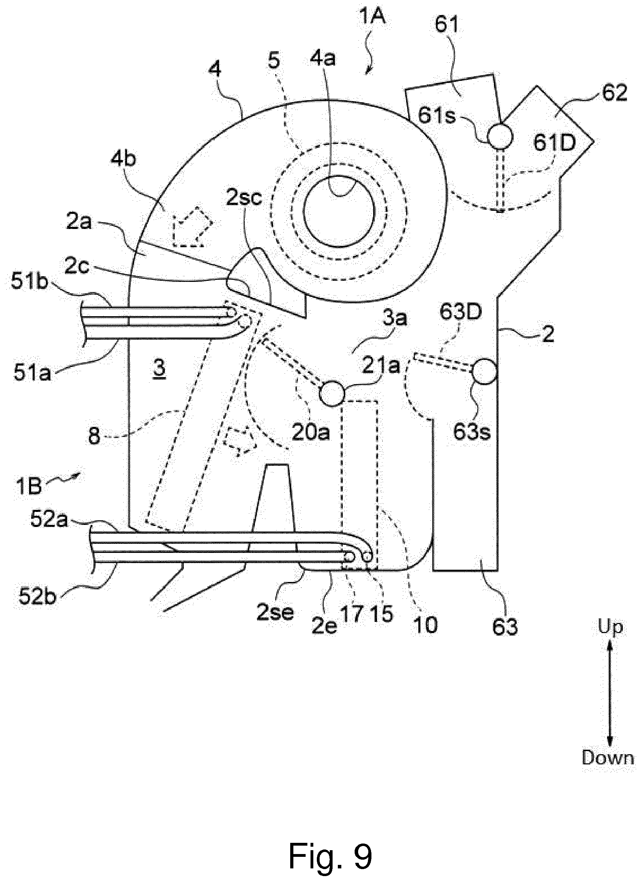

Although the overall structure of the air conditioner 1 is described above with reference to Figs. 1 to 4, the overall structure of the air conditioner 1 is not limited to the one described above. The overall structure of the air conditioner 1 shown in Figs. 1 to 4 can be variously modified. Fig. 9 is a view showing a left side surface of the air conditioner 1 in Figs. 1 to 4, with the overall structure variously modified. The driving mechanism for driving various doors is omitted in the drawing for clearness.

For example, the blower 1A may be disposed on one side in the left-right direction of the air conditioning case 2. As shown in Fig. 9, the blower 1A may be disposed to face the top surface 2c of the air conditioning case 2. As shown in Fig. 9, the interior condenser 10 may be disposed in contact with a bottom surface 2e of the air conditioning case 2 so as to form an upper diversion 3a only on an upper side of the interior condenser 10. In this case, an air mix door that is provided in the air passage 3 may include only the upper air mix door 20a provided in the upper part of the air passage 3. The air mix doors 20a and 20b are not limited to slide doors. For example, as shown in Fig. 9, the air mix door 20a may extend from the shaft 21a and may be rotated around the rotation axis of the upper shaft 21a in response to circumferential rotation of the upper shaft 21a, as in the case of the air outlet doors 61D, 62D, and 63D, thereby adjusting a degree of opening of the upper diversion 3a. Similarly, the air outlet doors 61D, 62D, and 63D may be slide doors. In addition, as shown in Fig. 9, the two air outlets 61 and 62 may be opened and closed by the one air outlet door 61D.

Next, the heat transfer medium circuit 40 to which the air conditioner 1 is connected is described with reference to Fig. 1. In the illustrated example, the evaporator 8 and the interior condenser 10 of the air conditioner 1 are connected to the heat transfer medium circuit 40 shown in Fig. 1, through which a refrigerant, for example, a fluorocarbon refrigerant, such as an HFC-134a refrigerant, circulates as a heat transfer medium. The air conditioner 1 and the heat transfer medium circuit 40 are suitably used in an electric vehicle, which does not have an internal-combustion engine but obtains a travel driving force from an electric motor for traveling, or in a hybrid vehicle, which obtains a travel driving force from both an internal-combustion engine and an electric motor for traveling.

The heat transfer medium circuit 40 is also provided with an exterior heat exchanger 41, a compressor 42, expansion valves 43a and 43b, an accumulator 44, and switching valves 45a and 45b, in addition to the evaporator 8 and the interior condenser 10.

The exterior heat exchanger 41 may be disposed rearward of a front grille in a close manner in an engine room of a vehicle or in a motor room of an electric vehicle.

The expansion valve 43a is provided on an immediately upstream side of the exterior heat exchanger 41 and is preferably an electronic expansion valve. Using the electronic expansion valve enables adjusting the opening of the expansion valve 43a on the basis of a measured value measured by a temperature sensor (not shown), so that the refrigerant will appropriately evaporate in the exterior heat exchanger 41. The temperature sensor is provided on an immediately downstream side of the exterior heat exchanger 41. Alternatively, using the electronic expansion valve enables the expansion valve 43a to largely open at a degree so as not to substantially function as an expansion valve, regardless of the measured value measured by the temperature sensor. This function is difficult to obtain in a case of using a thermal expansion valve.

The expansion valve 43b is provided on an immediately upstream side of the evaporator 8 and may use either one of an electronic expansion valve and a thermal expansion valve. This selection may be determined in consideration of a required performance and cost. The thermal expansion valve varies its opening in response to pressure of gas that is sent from a temperature sensing cylinder that is provided on an immediately downstream side of the evaporator 8.

The compressor 42 includes a motor for driving this compressor using electric power or is mechanically connected to a motor. The compressor 42 may also be called an electric compressor. The compressor 42 may also be disposed in an engine room.

The switching valves 45a and 45b are electric automatic valves, specifically, electromagnetic valves such as solenoid valves. These switching valves 45a and 45b are switched to change the flow path of the refrigerant within the heat transfer medium circuit 40, thereby enabling change of operation modes. The operation modes are described later.

The accumulator 44 functions as a gas-liquid separator. The accumulator 44 receives the refrigerant and separates the refrigerant into gas and liquid, and the accumulator 44 stores the liquid refrigerant as an excess refrigerant and let only the gas refrigerant flow out. The accumulator 44 may also be disposed in an engine room.

The electric rotary motor 6, the actuator 31 of the air mix door driving mechanism 30a, the compressor 42, more exactly, a driving motor (not shown) of the compressor 42, and the switching valves 45a and 45b are operated by control current, which is sent from a control unit (not shown).

Next, operation of the vehicle air conditioner 1 that is connected to the heat transfer medium circuit 40 is described.

In a heating mode, the switching valve 45b is closed not to let the refrigerant flow into the evaporator 8. Thus, air that flows in the air conditioning case 2 passes through the evaporator 8 without being cooled and then flows to the downstream side. At this time, the air mix doors 20a and 20b are moved to positions indicated by solid lines in Fig. 3, for example, to let all the air that passes through the evaporator 8 pass through the interior condenser 10.

The refrigerant is compressed by the compressor 42 and becomes high-temperature high-pressure gas, and this gas flows in the interior condenser 10. Thus, the air that flows in the air conditioning case 2 exchanges heat with this refrigerant when passing through the interior condenser 10 and is thereby heated. The interior condenser 10 releases the heat of the refrigerant to the air that flows therethrough. The heated air flows to the air outlets 61, 62, and 63.

In the heating mode, the air outlet doors 61D, 62D, and 63D are moved to positions indicated by solid lines in Fig. 3, for example, whereby the first air outlet 61 and the third air outlet 63 are opened, whereas the second air outlet 62 is closed. In these conditions, the heated air is blown out toward the inner surface of the windscreen through the first air outlet 61 and the defroster outlet, and the heated air is also blown out toward feet of a passenger in the vehicle through the third air outlet 63 and the foot outlet. This blow-out mode is called a defrost-foot mode.

The refrigerant is cooled and becomes middle-temperature high-pressure liquid by the heat exchange at the interior condenser 10. The liquid refrigerant flows out from the interior condenser 10, flows into the expansion valve 43a, and is expanded thereat, resulting in a low-temperature low-pressure mixture of gas and liquid. Then, the refrigerant flows into the exterior heat exchanger 41 and exchanges heat with air that also flows therethrough, such as outside air. Thus, the refrigerant absorbs heat from the outside air and evaporates, resulting in low-temperature low-pressure gas.

The refrigerant flows into the accumulator 44 through a branch point 46a, the switching valve 45a that is open, and a confluence 46b. The accumulator 44 stores the liquid refrigerant and let the gas refrigerant flow out. The gas refrigerant is sucked by the compressor 42.

Next, a cooling mode is described. In the cooling mode, the switching valve 45b is opened to let the refrigerant flow into the evaporator 8. Thus, the air that flows in the air conditioning case 2 passes through the evaporator 8 while being cooled and then flows to the downstream side. This cooling causes moisture in the air to condense on the evaporator 8 and be removed.

In the cooling mode, the air mix doors 20a and 20b are moved to positions indicated by dashed lines in Fig. 3, for example. In this condition, all the air that passes through the evaporator 8 bypasses the interior condenser 10. Thus, the air that is cooled by the evaporator 8 is blown out to the interior of the vehicle as it is.

In the cooling mode, the air outlet doors 61D, 62D, and 63D are moved to positions indicated by dashed lines in Fig. 3, for example, whereby the first air outlet 61 and the third air outlet 63 are closed, whereas the second air outlet 62 is opened. Thus, the cooled air is blown out toward an upper half of a passenger in the vehicle through the second air outlet 62 and the vent outlet. This blow-out mode is called a "vent mode".

The refrigerant is compressed by the compressor 42 and becomes high-temperature high-pressure gas, and this gas flows in the interior condenser 10. As described above, the heat exchange is not performed at the interior condenser 10, and thus, the refrigerant flows out from the interior condenser 10, still in the high-temperature high-pressure gaseous state.

Thereafter, the refrigerant passes through the expansion valve 43a that is adjusted to fully open, and then, the refrigerant flows into the exterior heat exchanger 41. At this time, the fully opened expansion valve 43a allows the refrigerant in the high-temperature high-pressure gaseous state to flow into the exterior heat exchanger 41 as it is. The refrigerant that flows into the exterior heat exchanger 41 exchanges heat with air that also flows therethrough, such as outside air, and the refrigerant is cooled and becomes middle-temperature high-pressure liquid. The liquid refrigerant flows out from the exterior heat exchanger 41, flows into the expansion valve 43b through the branch point 46a and the switching valve 45b that is open, and is expanded thereat, resulting in a low-temperature low-pressure mixture of gas and liquid.

Then, the refrigerant flows into the evaporator 8 and exchanges heat with air that flows in the air conditioning case 2. Thus, the refrigerant absorbs heat from the air and evaporates, resulting in low-temperature low-pressure gas. Thereafter, the refrigerant passes through the confluence 46b and the accumulator 44, and the refrigerant in the gaseous state is sucked by the compressor 42.

In the cooling mode, the switching valve 45a is closed not to let the refrigerant flow through the pipeline in which the switching valve 45a is interposed. This causes all of the refrigerant that flows through the heat transfer medium circuit 40 to flow into the evaporator 8 and exchange heat, thereby sufficiently cooling the air flowing in the air passage 3.

Although the above describes the air conditioner 1 that uses a refrigerant radiator for exchanging heat between air and the refrigerant, as the interior condenser 10, the type of the interior condenser 10 is not limited thereto. For example, the interior condenser 10 may be a hot-water radiator that exchanges heat between air and hot water, such as an engine cooling water heated by heat that is generated by an engine.

The driving mechanism 30 is disposed on the left side surface 2s in the left-right direction of the air conditioning case 2 as described above. This side surface 2s is also provided with multiple inflow pipes that let the heat transfer medium flow into the evaporator 8 and the interior condenser 10, respectively, as well as multiple outflow pipes that let the heat transfer medium flow out from the evaporator 8 and the interior condenser 10, respectively. Thus, the space for arranging the driving mechanism 30 is limited. On the other hand, in the case in which multiple doors are driven by one driving mechanism as in the illustrated example, the driving mechanism is unavoidably enlarged. Moreover, recently, it is desired to provide a large number of movable doors in the air conditioner, in order to perform temperature conditioning at a high accuracy by operating the air conditioner in various operation modes. This arises a need to provide a large number of driving mechanisms in the air conditioner. The driving mechanism should be disposed at an appropriate position corresponding to the position of the movable door to be driven by that driving mechanism. For these reasons, it is necessary to obtain a wide space for arranging the driving mechanism on the side surface of the air conditioning case, to increase the degree of freedom of arranging the driving mechanism.

Regarding this point, this embodiment is structured so as to have a wide space for arranging the driving mechanism 30 on the side surface 2s of the air conditioning case 2, as described below.

First, as described above, pipes 51a, 51b, 52a, and 52b shown in Fig. 1 are also disposed on the side surface of the air conditioning case 2, in addition to the driving mechanism 30. The pipe 51a is an inflow pipe that supplies the refrigerant to the evaporator 8, whereas the pipe 51b is an outflow pipe that let the refrigerant flow out from the evaporator 8. The pipe 52a is an inflow pipe that supplies the refrigerant to the interior condenser 10, whereas the pipe 52b is an outflow pipe that let the refrigerant flow out from the interior condenser 10. In the example in Fig. 2, these pipes 51a, 51b, 52a, and 52b are disposed on the left side surface 2s of the air conditioning case 2 due to the blower 1A disposed on the right side of the air conditioning case 2. That is, the pipes 51a, 51b, 52a, and 52b are disposed on the side surface 2s, which is the same as for the driving mechanism 30. Thus, the degree of freedom of arranging the driving mechanism 30 is limited by the arrangement of the pipes 51a, 51b, 52a, and 52b.

In view of this, in this embodiment, the pipes 52a and 52b that are connected to the interior condenser 10 among the pipes 51a, 51b, 52a, and 52b are collectively arranged in the vicinity of the bottom surface 2e of the left side surface 2s of the air conditioning case 2. The interior condenser 10 is structured so as to enable such arrangement of the pipes 52a and 52b.

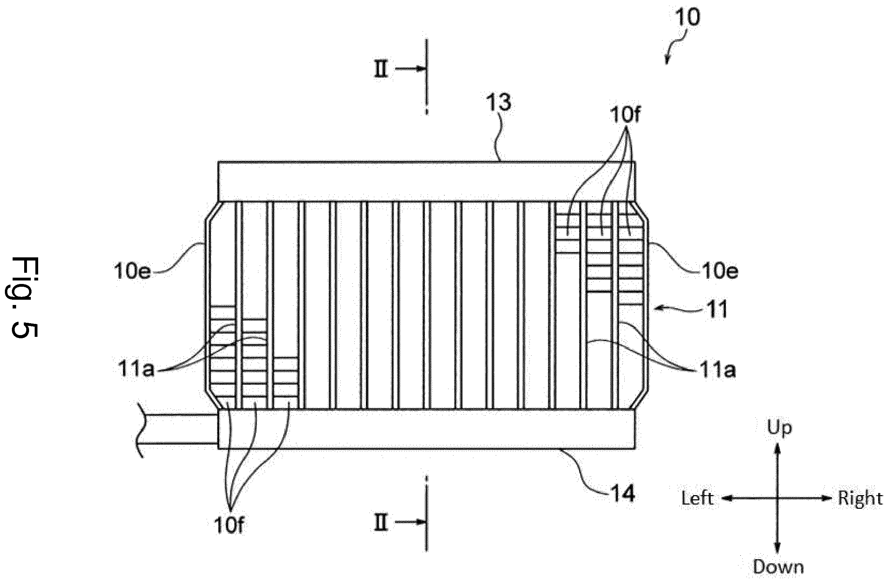

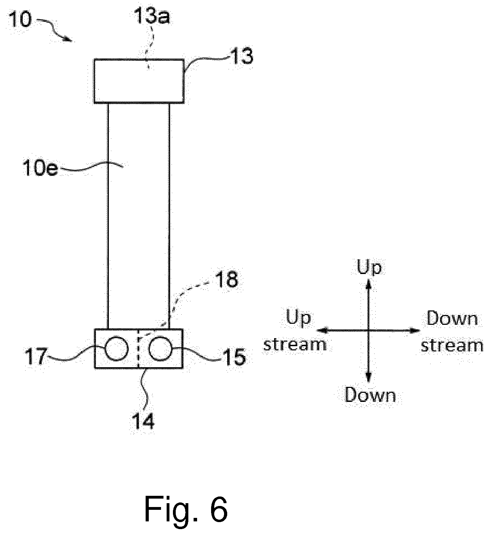

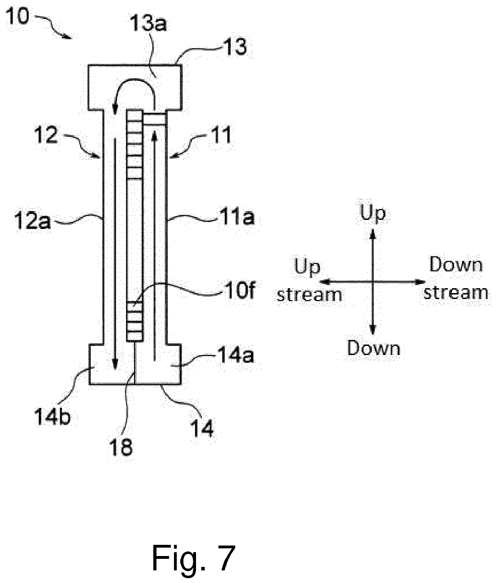

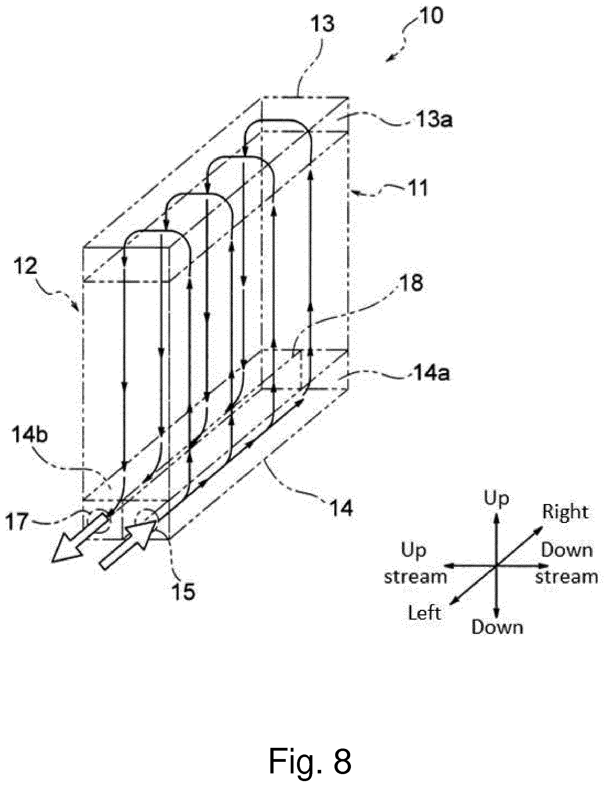

The following describes details of the structure of the interior condenser 10 with reference to Figs. 5 to 8. Fig. 5 shows the interior condenser of the air conditioner in Fig. 1 as viewed from the downstream side. Fig. 6 is a view showing a left side surface of the interior condenser in Fig. 5. Fig. 7 is a sectional view of the interior condenser taken along a line II-II in Fig. 5. Fig. 8 is a perspective view schematically showing flows of the heat transfer medium inside the interior condenser in Fig. 5. Figs. 7 and 8 show flows of the heat transfer medium by solid lines.

In the first place, it can be understood from Figs. 5 to 7 that the interior condenser 10 has a first heat-transfer-medium flow passage group 11 and a second heat-transfer-medium flow passage group 12. The first heat-transfer-medium flow passage group 11 includes multiple heat-transfer-medium passages that are mutually stacked in the left-right direction of the vehicle and that respectively extend in the up-down direction. The second heat-transfer-medium flow passage group 12 includes multiple heat-transfer-medium passages that are mutually stacked in the left-right direction of the vehicle and that respectively extend in the up-down direction. The second heat-transfer-medium flow passage group 12 is disposed on the upstream side of the first heat-transfer-medium flow passage group 11 in the flow direction of the air. The first heat-transfer-medium flow passage group 11 is constituted of multiple tubes 11a within which the heat transfer medium is able to pass through. The second heat-transfer-medium flow passage group 12 is constituted of multiple tubes 12a within which the heat transfer medium is able to pass through. The tubes 11a of the first heat-transfer-medium flow passage group 11 have fins 10f for increasing a heat releasing capacity, which are joined therebetween. Similarly, the tubes 12a of the second heat-transfer-medium flow passage group 12 have fins 10f for increasing the heat releasing capacity, which are joined therebetween. An end plate 10e is arranged at each of a right end and a left end in the stacked direction. The interior condenser 10 includes an upper header tank 13 and a lower header tank 14 that extend in the left-right direction. The upper header tank 13 and the lower header tank 14 are respectively joined to upper and lower ends of the first heat-transfer-medium flow passage group 11 and the second heat-transfer-medium flow passage group 12. The lower header tank 14 contains a partition wall 18 that extends in the left-right direction. The partition wall 18 divides the inside of the lower header tank 14 into a first area 14a and a third area 14b. The first area 14a communicates with the first heat-transfer-medium flow passage group 11. The third area 14b communicates with the second heat-transfer-medium flow passage group 12. The third area 14b is set so as to be on the upstream side of the first area 14a. The upper header tank 13 contains a second area 13a. The tube 11a of the first heat-transfer-medium flow passage group 11 and the tube 12a of the second heat-transfer-medium flow passage group 12 are formed of respective members in Fig. 7, but the structures of the tubes 11a and 12a are not limited thereto. For example, adjacent tubes 11a and 12a may be integrally formed by using a tube plate (not shown). In this embodiment, the tube 11a constituting the first heat-transfer-medium flow passage group 11 and the tube 12a constituting the second heat-transfer-medium flow passage group 12 may be formed of respective members or may be partially or entirely formed of one member.

The lower header tank 14 includes a heat-transfer-medium inflow port 15 which supplies heat-transfer-medium to the inside of the interior condenser 10 and a heat-transfer-medium outflow port 17 through which the heat-transfer-medium flows out from the inside of the interior condenser 10 that are provided at one side in the left-right direction. That is, the heat-transfer-medium inflow port 15 is joined to the inflow pipe 52a, whereas the heat-transfer-medium outflow port 17 is joined to the outflow pipe 52b. The heat-transfer-medium inflow port 15 communicates with the first area 14a that is joined to the first heat-transfer-medium flow passage group 11. Similarly, the heat-transfer-medium outflow port 17 communicates with the third area 14b that is joined to the second heat-transfer-medium flow passage group 12. It can be understood from Figs. 7 and 8 that the heat transfer medium flows into the first area 14a of the lower header tank 14 through the heat-transfer-medium inflow port 15, flows into the second area 13a of the upper header tank 13 by passing through the first heat-transfer-medium flow passage group 11, flows into the third area 14b of the lower header tank 14 through the second heat-transfer-medium flow passage group 12, and flows out from the heat-transfer-medium outflow port 17.

In the illustrated example, the heat-transfer-medium inflow port 15 may also be called a "refrigerant inflow port" considering that the interior condenser 10 is a refrigerant radiator that exchanges heat between air and the refrigerant. Similarly, the heat-transfer-medium outflow port 17 may also be called a "refrigerant outflow port" . In addition, in a case in which the interior condenser 10 is a hot-water radiator that exchanges heat between air and hot water as described above, the heat-transfer-medium inflow port 15 may also be called a "hot-water inflow port", and the heat-transfer-medium outflow port 17 may also be called a "hot-water outflow port".

The interior condenser 10 thus structured is disposed in the air conditioning case 2 as follows. That is, the side in the left-right direction of the interior condenser 10, which is provided with the heat-transfer-medium inflow port 15 and the heat-transfer-medium outflow port 17, is disposed on the left side surface 2s side of the air conditioning case 2, whereas the other side in the left-right direction of the interior condenser 10 is disposed on the right side surface 2t side of the air conditioning case 2. Moreover, the upper header tank 13 is disposed above the lower header tank 14. This allows the pipes 52a and 52b to be connected to a lower end part of the interior condenser 10 from the left side of the interior condenser 10. This disposition enables joining the pipes 52a and 52b, which respectively extend from the exterior heat exchanger 41 and the compressor 42, to the interior condenser 10 along the vicinity of a lower edge 2se of the left side surface 2s in a mutually adjacent manner, as shown in Figs. 3 and 4.

Disposing the pipes 52a and 52b in the vicinity of the lower edge 2se of the left side surface 2s in a mutually adjacent manner provides one continuous space that extends from a center area to an upper edge 2sc in the up-down direction on the left side surface 2s of the air conditioning case 2, as a space for arranging the driving mechanism 30, as shown in Fig. 3. It can be understood from Fig. 4 that the center area of the left side surface 2s is an area to which the shafts 21a and 21b of the air mix doors 20a and 20b extend out and is thereby suitable for arranging the air mix door driving mechanism 30a that rotationally drives the shafts 21a and 21b. This area and its vicinity are provided as one continuous space for arranging the air mix door driving mechanism 30a, thereby increasing the degrees of freedom of design and arrangement of the air mix door driving mechanism 30a.

It can be understood from Fig. 1 that the pipes 51a and 51b, which are connected to the evaporator 8, respectively extend to the exterior heat exchanger 41 and the accumulator 44, which are to be disposed in an engine room. For this reason, the pipes 51a and 51b of the evaporator 8 extend approximately forward of the evaporator 8 to the upstream side, on the left side surface 2s of the air conditioning case 2, as shown in Figs. 3 and 4. That is, the pipes 51a and 51b of the evaporator 8 are not disposed in an area rearward of the evaporator 8 in the downstream side, on the left side surface 2s. The pipes 52a and 52b, which are connected to the interior condenser 10, respectively extend to the compressor 42 and the exterior heat exchanger 41, which are to be disposed in an engine room. Thus, the pipes 52a and 52b also extend forward of the interior condenser 10 to the upstream side, on the left side surface 2s of the air conditioning case 2. That is, the pipes 52a and 52b of the interior condenser 10 are not disposed in an area rearward of the interior condenser 10 in the downstream side on the left side surface 2s.

Such a structure of the interior condenser 10 provides one continuous space that extends from the center area to the upper edge 2sc in the up-down direction and also to a downstream side edge 2sd, on the left side surface 2s of the air conditioning case 2. This space is able to be used as the space for arranging the driving mechanism 30, which drives each of the various doors 20a, 20b, 61D, 62D, and 63D. The area in the vicinity of the downstream side edge 2sd of the left side surface 2s is an area to which the shafts 61s, 62s, and 63s of the air outlet doors 61D, 62D, and 63D extend out and is thus suitable for arranging a driving mechanism that rotationally drives the shafts 61s, 62s, and 63s. The area that is suitable for arranging the driving mechanism for the air outlet doors 61D, 62D, and 63D and the area that is suitable for arranging the air mix door driving mechanism 30a for the air mix doors 20a and 20b are obtained as one continuous space. This increases the degrees of freedom of design and arrangement of each of the air mix door driving mechanism 30a for the air mix doors 20a and 20b and the air outlet door driving mechanism for the air outlet doors 61D, 62D, and 63D, that is, the whole driving mechanism 30.

As shown in Figs. 7 and 8, in the air conditioner 1, the heat transfer medium flows into the first area 14a of the lower header tank 14 through the heat-transfer-medium inflow port 15 of the interior condenser 10, flows into the second area 13a of the upper header tank 13 by rising up through the first heat-transfer-medium flow passage group 11, flows into the third area 14b by falling down through the second heat-transfer-medium flow passage group 12 to the lower header tank 14, and flows out from the heat-transfer-medium outflow port 17. More specifically, the refrigerant that flows into the second area 13a flows from the downstream side to the upstream side of the air that flows through the interior condenser 10. Such a flow of the refrigerant may be called a "counter flow" in some cases.

Conversely, a conventional interior condenser may be structured to let a heat transfer medium flow thereinto from one of an upper end part and a lower end part and flow thereout from the other, due to easiness of manufacturing and other causes. Such a flow of the refrigerant may be called a "one-pass flow" in some cases. Thus, the conventional interior condenser includes a heat-transfer-medium inflow port at one of an upper end part and a lower end part and a heat-transfer-medium outflow port at the other.

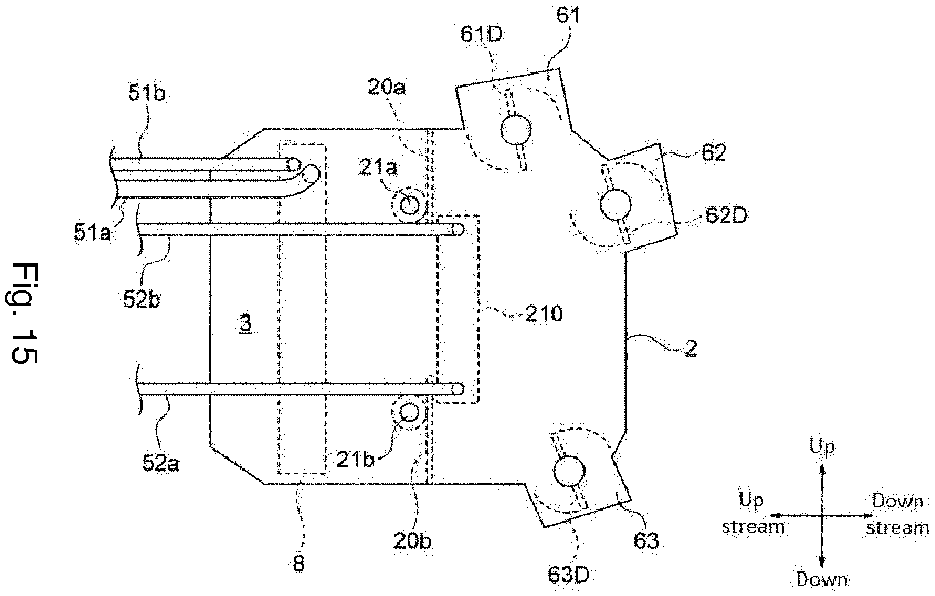

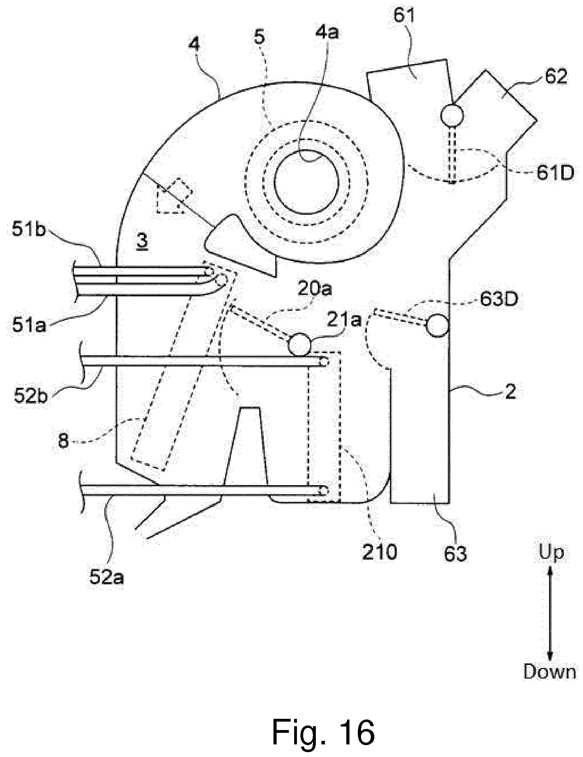

If an interior condenser 210 that is a conventional one, as described above, is used in the air conditioner shown in Figs. 1 to 8 or in Fig. 9, instead of the interior condenser 10, the heat transfer medium inflow tube 52a and the heat transfer medium outflow tube 52b are respectively joined to a lower end part and an upper end part of the interior condenser 210 in the condition that the heat transfer medium is a refrigerant, as shown in Figs. 15 and 16. In this case, as shown in Figs. 15 and 16, the one pipe 52a extends out from the center area in the up-down direction of the left side surface 2s of the air conditioning case 2. This prevents arranging the air mix door driving mechanism 30a in the center area although this area is suitable. In particular, in a case in which the interior condenser 210 is disposed at the center in the up-down direction of the air passage 3 as shown in Fig. 15, a continuous space with a sufficient area is difficult to obtain in each of the vicinity of the upper shaft 21a and the vicinity of the lower shaft 21b, on the left side surface 2s. Thus, the degrees of freedom of design and arrangement of the air mix door driving mechanism 30a are further limited.

The above-described embodiment provides the air conditioner 1 that is the vehicle air conditioner 1 including the air conditioning case 2, the interior condenser 10, the doors 20a, 61D, 62D, and 63D, and the driving mechanism 30. The air conditioning case 2 forms the air passage 3 through which air passes. The interior condenser 10 is disposed in the air passage 3 so as to form the upper diversion 3a on the upper side. The doors 20a, 61D, 62D, and 63D are disposed in the air passage 3 to change the flow of the air flowing in the air passage 3. The driving mechanism 30 is disposed on the one side surface 2s of the air conditioning case 2 in the left-right direction of the vehicle and drives one or more of the doors 20a, 61D, 62D, and 63D. The interior condenser 10 includes the first heat-transfer-medium flow passage group 11, the second heat-transfer-medium flow passage group 12, the lower header tank 14, the upper header tank 13, the heat-transfer-medium inflow port 15, and the heat-transfer-medium outflow port 17. The first heat-transfer-medium flow passage group 11 has the multiple flow passages for the heat transfer medium, and the flow passages are mutually stacked in the left-right direction of the vehicle and respectively extend in the up-down direction. The second heat-transfer-medium flow passage group 12 has the multiple flow passages for the heat transfer medium, and the flow passages are mutually stacked in the left-right direction of the vehicle and respectively extend in the up-down direction. The second heat-transfer-medium flow passage group 12 is disposed on the upstream side of the first heat-transfer-medium flow passage group 11 in the flow direction of the air. The lower header tank 14 is joined to the lower ends of the first heat-transfer-medium flow passage group 11 and the second heat-transfer-medium flow passage group 12 and has the inside space that is divided by the partition wall 18 into the multiple areas including at least the first area 14a and the third area 14b. The first area 14a communicates with the first heat-transfer-medium flow passage group 11. The third area 14b communicates with the second heat-transfer-medium flow passage group 12. The upper header tank 13 is joined to the upper ends of the first heat-transfer-medium flow passage group 11 and the second heat-transfer-medium flow passage group 12 and contains the second area 13a that communicates with the first heat-transfer-medium flow passage group 11 and the second heat-transfer-medium flow passage group 12. The heat-transfer-medium inflow port 15 is provided to the first area 14a and supplies the heat transfer medium to the first heat-transfer-medium flow passage group 11. The heat-transfer-medium outflow port 17 is provided to the third area 14b and lets the heat transfer medium, which is collected in the third area 14b, flow out. The heat-transfer-medium inflow port 15 and the heat-transfer-medium outflow port 17 are provided at a lower part of one side of the interior condenser 10.

The air conditioner 1 of this embodiment has the heat-transfer-medium inflow port 15 and the heat-transfer-medium outflow port 17 that are provided at the lower part of the interior condenser 10. Thus, the inflow pipe 52a for supplying the heat transfer medium to the interior condenser 10 and the outflow pipe 52b for letting the heat transfer medium flow out from the interior condenser 10 are both joined to the lower part of the interior condenser 10. Joining both of the inflow pipe 52a and the outflow pipe 52b to the lower part of the interior condenser 10 enables collectively disposing the inflow pipe 52a and the outflow pipe 52b in a mutually adjacent manner in the vicinity of the lower edge 2se of the one side surface 2s of the air conditioning case 2. This results in formation of one continuous space that enables arranging the driving mechanism 30, from an area overlapping the interior condenser 10 to the upper side in the left-right direction, on the one side surface 2s of the air conditioning case 2. The area that overlaps the interior condenser 10 on the one side surface 2s of the air conditioning case 2 and its surrounding area are particularly suitable for arranging the driving mechanism 30. From this point of view, providing a wide space sufficient for arranging the driving mechanism 30 in such areas increases the degrees of freedom of design and arrangement of the driving mechanism 30. This space continues to an area rearward of the interior condenser 10 on the downstream side, on the one side surface 2s. This further increases the degrees of freedom of design and arrangement of the driving mechanism 30.

In the above-described embodiment, the interior condenser 10 is disposed in the air passage 3 so as to form the lower diversion 3b in the lower side. If a conventional interior condenser is used in the air conditioner, pipes extend out from an upper part and a lower part of the interior condenser, respectively, as shown in Figs. 15 and 16. This prevents formation of one continuous space with a sufficient area on the one side surface 2s of the air conditioning case 2. In particular, in a case of disposing the conventional interior condenser so as to form diversions on an upper side and a lower side of the conventional interior condenser, as described above, a continuous space with a very small area is formed on the one side surface 2s, as shown in Fig. 15. On the other hand, the interior condenser 10 of the above-described embodiment enables formation of a wide space sufficient for arranging the driving mechanism 30 on the one side surface 2s of the air conditioning case 2.

The above-described embodiment has the interior condenser 10, which is, for example, a refrigerant radiator that exchanges heat between air and the refrigerant. In this case, the heat-transfer-medium inflow port 15 is a refrigerant inflow port, whereas the heat-transfer-medium outflow port 17 is a refrigerant outflow port.

The interior condenser 10 can be a hot-water radiator that exchanges heat between air and hot water. In this case, the heat-transfer-medium inflow port 15 is a hot-water inflow port, whereas the heat-transfer-medium outflow port 17 is a hot-water outflow port.

The above-described embodiment has the door which is, for example, the air mix door 20a that adjusts the ratio of the air flowing toward the interior condenser 10 and the air flowing toward the upper diversion 3a. The driving mechanism 30 is the air mix door driving mechanism 30a that drives at least the air mix door 20a.

The above-described embodiment has the air conditioning case 2 that includes the multiple air outlets 61, 62, and 63, which blow out one or both of the air that passes through the interior condenser 10 and the air that bypasses the interior condenser 10, toward the interior of the vehicle. The air outlets 61, 62, and 63 are respectively provided with the air outlet doors 61D, 62D, and 63D that open and close the corresponding air outlets 61, 62, and 63. In this air conditioner 1, the driving mechanism 30 that is disposed on the one side surface 2s of the air conditioning case 2 may be the air outlet door driving mechanism that drives one or more of the air outlet doors 61D, 62D, and 63D of the multiple air outlets 61, 62, and 63.

In the above-described embodiment, the air conditioner 1 further includes the blower 1A that sends air to be flowed in the air passage 3. The blower 1A is disposed on the side facing the other side surface 2t of the air conditioning case 2. In this air conditioner 1, it is strongly desired, in particular, to dispose the driving mechanism 30 as well as the pipes 52a and 52b on the one side surface 2s of the air conditioning case 2.

### Modification Example

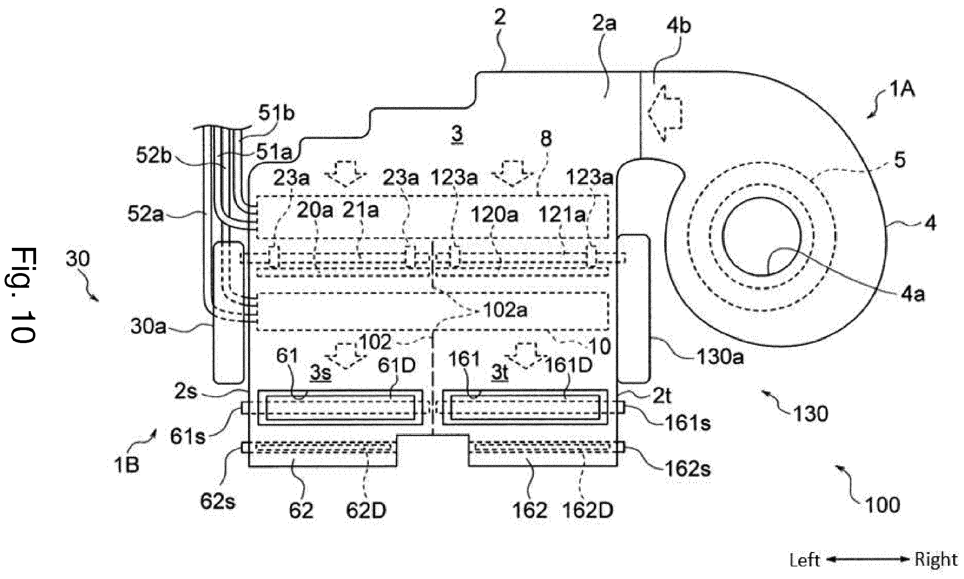

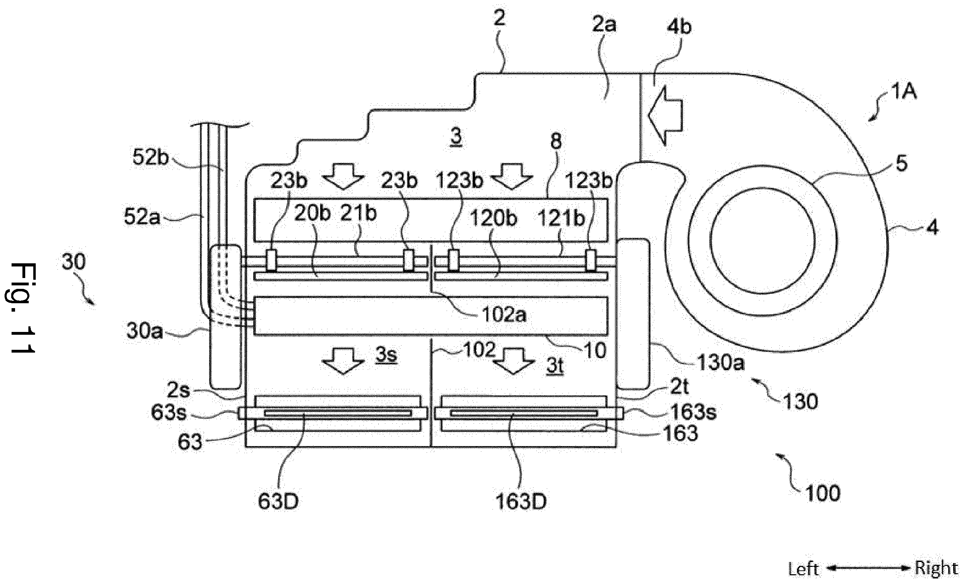

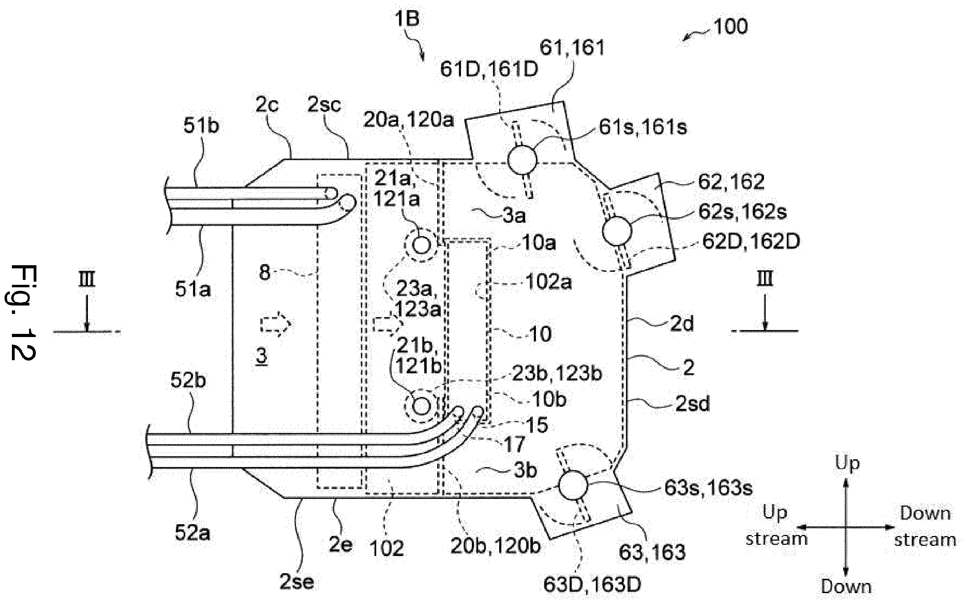

Next, a modification example of the air conditioner 1 of the above-described embodiment will be described with reference to Figs. 10 to 12. Fig. 10 is a plan view as viewed from above of an air conditioner of a modification example, which corresponds to Fig. 2. Fig. 11 is a plan view as viewed from above of an inside of a lower half of the air conditioner in Fig. 10. Fig. 12 is a left side view of the air conditioner in Fig. 10. In addition, Fig. 11 is a sectional view taken along a line III-III in Fig. 12.

The modification example shown in Figs. 10 to 12 differs from the air conditioner shown in Figs. 1 to 8 primarily in that the air passage of the air conditioning case is divided into a left space and a right space to which air mix doors, air outlets, and air outlet doors are provided respectively. Moreover, the modification example differs from the air conditioner shown in Figs. 1 to 8 in that a driving mechanism is also provided on a right side surface of the air conditioning case. The other structure is approximately the same as that of the air conditioner 1 shown in Figs. 1 to 8. In the modification example shown in Figs. 10 to 12, components that are the same as those of the embodiment shown in Figs. 1 to 8 are represented by the same reference signs, and detailed descriptions thereof are not repeated.

The air conditioning case 2 contains a division wall 102 that is provided at a center in the left-right direction to divide the air passage 3 into the left space and the right space. The division wall 102 extends from the vicinity of a downstream side surface of the evaporator 8 to the vicinity of the downstream side end 2d of the air conditioning case 2. Thus, air that passes through the evaporator 8 is divided into air that flows in a left half part 3s of the air passage 3 and air that flows in a right half part 3t of the air passage 3. The division wall 102 is provided with an opening 102a for inserting the interior condenser 10, whereby the interior condenser 10 extends from the left half part 3s to the right half part 3t of the air passage 3.

In each of the left half part 3s and the right half part 3t of the air passage 3, the upper diversion 3a is formed above the interior condenser 10, and the lower diversion 3b is formed under the interior condenser 10.

The air conditioning case 2 has multiple left air outlets 61, 62, and 63 that are provided at a downstream side end so as to communicate with the left half part 3s of the air passage 3. The air conditioning case 2 also has multiple right air outlets 161, 162, and 163 that are provided at the downstream side end so as to communicate with the right half part 3t of the air passage 3. Thus, air that flows in the left half part 3s of the air passage 3 blows out from the left air outlets 61, 62, and 63, whereas air that flows in the right half part 3t of the air passage 3 blows out from the right air outlets 161, 162, and 163. In the illustrated example, the multiple left air outlets 61, 62, and 63 include a left first air outlet 61, a left second air outlet 62, and a left third air outlet 63. Similarly, the multiple right air outlets 161, 162, and 163 include a right first air outlet 161, a right second air outlet 162, and a right third air outlet 163.

The left first air outlet 61 is provided at a left half part of the top surface 2c of the air conditioning case 2. The left first air outlet 61 has a downstream end that is connected to a left defroster outlet (not shown) that blows out air toward an inner surface of a left half of a windscreen in the vehicle interior. The left second air outlet 62 is provided on an upper part of a left half of the downstream side end surface 2d of the air conditioning case 2. The left second air outlet 62 has a downstream end that is connected to a left vent outlet (not shown) that blows out air toward an upper half of a passenger on a driver seat or a passenger seat, or in some cases, a rear seat, which is positioned at a left half of the interior of the vehicle. The left third air outlet 63 is provided on a lower part of a left half of the downstream side end surface 2d of the air conditioning case 2. The left third air outlet 63 has a downstream end that is connected to a left foot outlet (not shown) that blows out air toward feet of a passenger on a driver seat or a passenger seat, or in some cases, a rear seat, which is positioned at the left half of the interior of the vehicle.

Similarly, the right first air outlet 161 is provided at a right half part of the top surface 2c of the air conditioning case 2. The right first air outlet 161 has a downstream end that is connected to a right defroster outlet (not shown) that blows out air toward an inner surface of a right half of the windscreen in the vehicle interior. The right second air outlet 162 is provided at an upper part of a right half of the downstream side end surface 2d of the air conditioning case 2. The right second air outlet 162 has a downstream end that is connected to a right vent outlet (not shown) that blows out air toward an upper half of a passenger on a driver seat or a passenger seat, or in some cases, a rear seat, which is positioned at a right half of the interior of the vehicle. The right third air outlet 163 is provided on a lower part of a right half of the downstream side end surface 2d of the air conditioning case 2. The right third air outlet 163 has a downstream end that is connected to a right foot outlet (not shown) that blows out air toward feet of a passenger on a driver seat or a passenger seat, or in some cases, a rear seat, which is positioned at the right half of the interior of the vehicle.

The air conditioning case 2 has various doors, specifically, left air mix doors 20a and 20b and left air outlet doors 61D, 62D, and 63D that are provided in the left half part 3s of the air passage 3. The various doors change flows of the air that passes through the air passage 3. The air conditioning case 2 includes the driving mechanism 30 that is provided on the left side surface to drive the doors 20a, 20b, 61D, 62D, and 63D. The driving mechanism 30 includes an air mix door driving mechanism 30a for driving the left air mix doors 20a and 20b and includes an air outlet door driving mechanism (not shown) for driving the left air outlet doors 61D, 62D, and 63D.

Similarly, the air conditioning case 2 has various doors, specifically, right air mix doors 120a and 120b and right air outlet doors 161D, 162D, and 163D, that are provided in the right half part 3t of the air passage 3. The various doors change flows of the air that passes through the air passage 3. The air conditioning case 2 includes a driving mechanism 130 that is provided on the right side surface to drive the doors 120a, 120b, 161D, 162D, and 163D. In the illustrated example, the driving mechanism 130 includes an air mix door driving mechanism 130a for driving the right air mix doors 120a and 120b and includes an air outlet door driving mechanism (not shown) for driving the right air outlet doors 161D, 162D, and 163D.

The left air mix doors 20a and 20b are disposed in the left half part 3s of the air passage 3 to open and close the left half of the upper diversion 3a and the lower diversion 3b, respectively. The structures of the left air mix doors 20a and 20b other than those above are similar to those of the air mix doors 20a and 20b shown in Figs. 1 to 8, and therefore, descriptions thereof are not repeated. As in the example shown in Figs. 1 to 8, the shafts 21a and 21b are connected to the left air mix doors 20a and 20b and extend out from the left side surface 2s of the air conditioning case 2. These shafts 21a and 21b have ends that are connected to the air mix door driving mechanism 30a.

As in the case of the left air mix doors 20a and 20b, the right air mix doors 120a and 120b are provided between the evaporator 8 and the interior condenser 10 in the right half part 3t of the air passage 3. The right air mix doors 120a and 120b are plate-shaped members and are arranged approximately in parallel to the upstream side surface of the interior condenser 10. The right air mix doors 120a and 120b are respectively provided in an upper part and a lower part of the right half part 3t of the air passage 3 and adjust degrees of openings of the right halves of the upper diversion 3a and the lower diversion 3b, respectively. The following also refers to the air mix door 120a, which is disposed in an upper part of the right half part 3t of the air passage 3, as a "right upper air mix door 120a", and also refers to the air mix door 120b, which is disposed in a lower part of the right half part 3t of the air passage 3, as a "right lower air mix door 120b".

The right upper air mix door 120a is slidable along the up-down direction in the upper part of the right half part 3t of the air passage 3. The right upper air mix door 120a adjusts the ratio of the air flowing toward the upper part 10a of the interior condenser 10 and the air flowing toward the upper diversion 3a, depending on its position. The right lower air mix door 120b is slidable along the up-down direction in the lower part of the right half part 3t of the air passage 3. The right lower air mix door 120b adjusts the ratio of the air flowing toward the lower part 10b of the interior condenser 10 and the air flowing toward the lower diversion 3b, depending on its position.

As shown in Figs. 10 and 11, the right upper air mix door 120a and the right lower air mix door 120b are respectively connected to shafts 121a and 121b that extend along the left-right direction in the right half part 3t of the air passage 3. Thus, the right upper air mix door 120a and the right lower air mix door 120b are respectively slidable along the up-down direction in the upper part and in the lower part of the right half part 3t of the air passage 3 in accordance with rotation of the shafts 121a and 121b. More specifically, one surface of each of the air mix doors 120a and 120b is provided with a rack (not shown) from an upper edge to a lower edge of the surface. The shafts 121a and 121b have outer circumferential surfaces that are respectively provided with pinions 123a and 123b for engaging with the racks. When the shafts 121a and 121b are rotated in circumferential directions, the rotation movements of the shafts 121a and 121b are converted into up-down movements by the pinions 123a and 123b and the racks, whereby the air mix doors 120a and 120b are slid in the up-down direction.

The shafts 121a and 121b have right ends that are connected to the air mix door driving mechanism 130a. The air mix door driving mechanism 130a is structured in a manner similar to that in the air mix door driving mechanism 30a and rotationally drives the shafts 121a and 121b. The air mix door driving mechanism 130a is disposed between the right side surface 2t of the air conditioning case 2 and the blower 1A.

The left air outlet doors 61D, 62D, and 63D are respectively provided to the left air outlets 61, 62, and 63 to open and close them. The left air outlet doors 61D, 62D, and 63D are structured in a manner similar to those in the air outlet doors 61D, 62D, and 63D shown in Figs. 1 to 8, and therefore, descriptions thereof are not repeated. The left air outlet doors 61D, 62D, and 63D respectively corotate with the shafts 61s, 62s, and 63s. The shafts 61s, 62s, and 63s have left ends that extend out from the left side surface 2s of the air conditioning case 2 and that are connected to a driving mechanism (not shown).

The right air outlet doors 161D, 162D, and 163D are respectively provided to the right air outlets 161, 162, and 163 to open and close them. In the illustrated example, as in the case of the air outlet doors 61D, 62D, and 63D, the right air outlet doors 161D, 162D, and 163D are plate-shaped members and are respectively fixed to shafts 161s, 162s, and 163s that extend in the left-right direction. The right air outlet doors 161D, 162D, and 163D are rotated around rotational axes of the corresponding shafts 161s, 162s, and 163s in response to circumferential rotation of the shafts 161s, 162s, and 163s, thereby opening and closing the corresponding air outlets 161, 162, and 163. The shafts 161s, 162s, and 163s have right ends that extend out from the right side surface 2t of the air conditioning case 2 and that are connected to a driving mechanism (not shown). Thus, the shafts 161s, 162s, and 163s are rotationally driven by this driving mechanism.

An air conditioner 100 having such a structure includes the driving mechanisms 30 and 130 that are respectively disposed on the left side surface 2s and the right side surface 2t of the air conditioning case 2. Thus, it is strongly desired to obtain a space sufficient for arranging the driving mechanism 30 on the side surface 2s, to which the pipes 52a and 52b are disposed.

In the modification example, the air conditioner 100 includes the other side doors 120a, 161D, 162D, and 163D and the other side driving mechanism 130. The other side doors 120a, 161D, 162D, and 163D are disposed on the other side in the left-right direction of the vehicle relative to the doors 20a, 61D, 62D, and 63D, in the air passage 3. The other side driving mechanism 130 is disposed on the other side side surface 2t of the air conditioning case 2 in the left-right direction of the vehicle and drives one or more of the other side doors 120a, 161D, 162D, and 163D. This air conditioner 100 includes the driving mechanisms 30 and 130 that are respectively disposed on the left side surface 2s and the right side surface 2t of the air conditioning case 2. Thus, it is strongly desired to obtain a space sufficient for arranging the driving mechanism 30 on the side surface 2s, to which the pipes 52a and 52b are disposed.

### Other Embodiments

In the above-described interior condenser 10, the heat transfer medium is supplied to the first area 14a through the heat-transfer-medium inflow port 15, rises up through the first heat-transfer-medium flow passage group 11 to flow into the second area 13a, falls down through the second heat-transfer-medium flow passage group 12 to be collected in the third area 14b, and flows out from the heat-transfer-medium outflow port 17. This structure of the interior condenser 10 is called a "two-pass structure", but any other structure is possible.

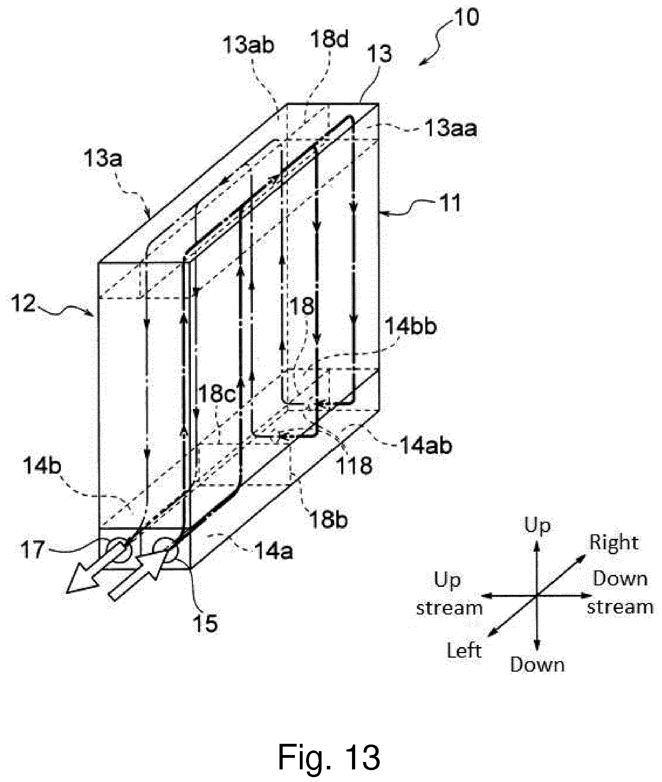

For example, as shown in Fig. 13, the inside of the lower header tank 14 may be divided into three or four areas by a partition wall 18, a second partition wall 18b, and a third partition wall 18c, and the inside of the upper header tank 13 may be divided into two areas by a fourth partition wall 18d, thereby structuring the interior condenser 10 so as to have a "four-pass structure".

In the interior condenser 10 with the four-pass structure, the inside of the lower header tank 14 is divided by the partition wall 18 into an upstream side area and a downstream side area in the flow direction of the air. The downstream side area of the lower header tank 14 is sectioned by the second partition wall 18b that is disposed in the vicinity of a center in the left-right direction, thereby having a first area 14a on a left side of the second partition wall 18b and a first secondary area 14ab on a right side of the second partition wall 18b. The upstream side area of the lower header tank 14 is sectioned by the third partition wall 18c that is disposed in the vicinity of a center in the left-right direction, thereby having a third area 14b on a left side of the third partition wall 18c and a third secondary area 14bb on a right side of the third partition wall 18c. The second area 13a of the upper header tank 13 is divided by the fourth partition wall 18d that extends in the left-right direction, thereby having a second first area 13aa on the downstream side and a second secondary area 13ab on the upstream side in the flow direction of the air. The second first area 13aa communicates with the first heat-transfer-medium flow passage group 11, whereas the second secondary area 13ab communicates with the second heat-transfer-medium flow passage group 12. The first secondary area 14ab and the third secondary area 14bb of the lower header tank 14 communicate with each other via a communication hole 118 that is provided in the partition wall 18.

Next, flows of the heat transfer medium in the interior condenser 10 with the four-pass structure are described with reference to Fig. 13. The flows of the heat transfer medium are shown in Fig. 13 by alternate long and short dash lines. Fig. 13 shows alternate long and short dash bold lines that represent flows of the heat transfer medium flowing between the lower header tank 14 and the upper header tank 13 through the first heat-transfer-medium flow passage group 11. Fig. 13 also shows alternate long and short dash thin lines that represent flows of the heat transfer medium flowing between the lower header tank 14 and the upper header tank 13 through the second heat-transfer-medium flow passage group 12.

First, the heat transfer medium flows into the first area 14a of the lower header tank 14 via the heat-transfer-medium inflow port 15. The heat transfer medium that flows into the first area 14a rises up in a left part of the first heat-transfer-medium flow passage group 11 and flows into a left part of the second first area 13aa of the upper header tank 13. The heat transfer medium that flows into the second first area 13aa moves to a right part of the second first area 13aa, falls down in a right part of the first heat-transfer-medium flow passage group 11, and flows into the first secondary area 14ab of the lower header tank 14. The heat transfer medium that flows into the first secondary area 14ab flows into the third secondary area 14bb through the communication hole 118, rises up in a right part of the second heat-transfer-medium flow passage group 12, and flows into a right part of the second secondary area 13ab of the upper header tank 13. Thereafter, the heat transfer medium moves to a left part of the second secondary area 13ab, falls down in a left part of the second heat-transfer-medium flow passage group 12, and flows into the third area 14b of the lower header tank 14. The refrigerant is thus collected to the third area 14b and flows out from the heat-transfer-medium outflow port 17.

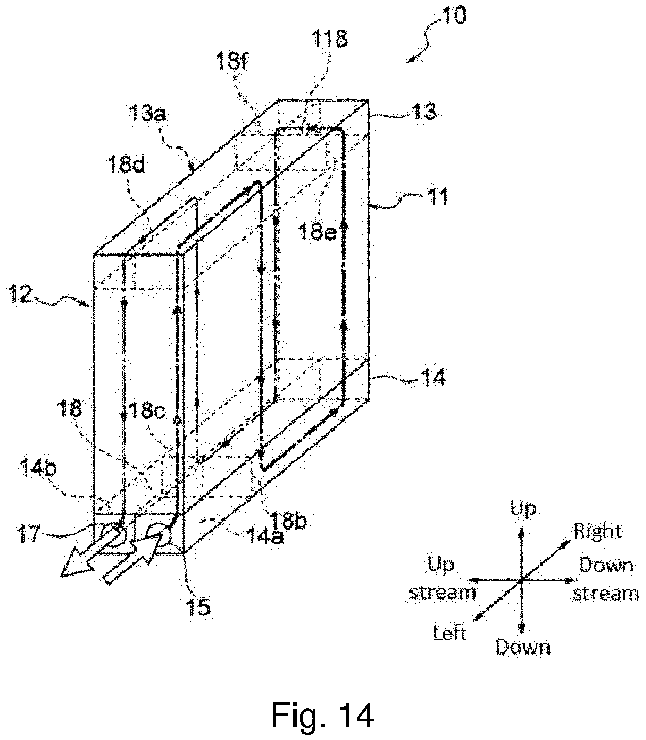

In another example, as shown in Fig. 14, the inside of the lower header tank 14 may be divided into four areas by partition walls 18, 18b and 18c, and the inside of the upper header tank 13 may be divided into four areas by partition walls 18d, 18e, and 18f, thereby structuring the interior condenser 10 so as to have a six-pass structure. The flows of the heat transfer medium in Fig. 14 are also represented by alternate long and short dash lines. Fig. 14 shows an alternate long and short dash bold line that represents a flow of the heat transfer medium flowing between the lower header tank 14 and the upper header tank 13 through the first heat-transfer-medium flow passage group 11. Fig. 14 also shows an alternate long and short dash thin line that represents a flow of the heat transfer medium flowing between the lower header tank 14 and the upper header tank 13 through the second heat-transfer-medium flow passage group 12.

This structure has the following features that are essentially the same as those of the structure of the above-described embodiment. That is, at least one side part in the left-right direction inside the lower header tank 14 is divided by the partition wall 18 or by the partition walls 18b, and 18c into the first area 14a on the downstream side and the third area 14b on the upstream side in the flow direction of the air. The heat-transfer-medium inflow port 15 is provided to supply the heat transfer medium to the first area 14a. The heat transfer medium that is supplied to the first area 14a is collected to the third area 14b through the first heat-transfer-medium flow passage group 11 and the second heat-transfer-medium flow passage group 12. The heat-transfer-medium outflow port 17 is provided to let the heat transfer medium in the third area 14b flow out. Moreover, the heat-transfer-medium inflow port 15 and the heat-transfer-medium outflow port 17 are provided at a lower part of one side of the interior condenser 10.

The vehicle air conditioner according to the invention is industrially manufacturable and is able to be dealt in a commercial transaction, thereby having an economic value and being industrially applicable.

### Description of Reference Numerals and Signs

- 1:: vehicle air conditioner
- 2:: air conditioning case
- 3:: air passage
- 3a:: upper diversion
- 3b:: lower diversion
- 10:: interior condenser
- 11:: first heat-transfer-medium flow passage group
- 12:: second heat-transfer-medium flow passage group
- 13:: upper header tank
- 14:: lower header tank
- 15:: heat-transfer-medium inflow port
- 17:: heat-transfer-medium outflow port
- 20:: air mix door
- 120:: other side air mix door
- 30:: driving mechanism
- 130:: other side driving mechanism
- 51a:: inflow pipe
- 51b:: outflow pipe
- 52a:: inflow pipe
- 52b:: outflow pipe
- 61D, 62D, 63D:: air outlet door
- 161D, 162D, 163D:: other side air outlet door

## Claims

1. An air conditioner (1, 100) for a vehicle, **characterized by** comprising:
an air conditioning case (2) that forms an air passage (3) through which air flows;
an interior condenser (10) disposed in the air passage (3) so as to form an upper diversion (3a) on an upper side;
doors (20a, 61D, 62D, 63D) disposed in the air passage (3) to change the flow of the air passing through the air passage (3); and
a driving mechanism (30) disposed on one side surface (2s) of the air conditioning case (2) in a left-right direction of the vehicle to drive one or more of the doors (20a, 61D, 62D, 63D),
the interior condenser (10) including
a first heat-transfer-medium flow passage group (11) having multiple flow passages for a heat transfer medium, and the flow passages mutually stacked in the left-right direction of the vehicle and respectively extending in an up-down direction,
a second heat-transfer-medium flow passage group (12) having multiple flow passages for the heat transfer medium and disposed on an upstream side of the first heat-transfer-medium flow passage group (11) in a flow direction of the air, and the flow passages mutually stacked in the left-right direction of the vehicle and respectively extending in the up-down direction,
a lower header tank (14) joined to lower end parts of the first heat-transfer-medium flow passage group (11) and the second heat-transfer-medium flow passage group (12) and having an inside that is divided by a partition wall (18, 18b, 18c) into multiple areas (14a, 14ab, 14b, 14bb), and the areas (14a, 14ab, 14b, 14bb) including at least a first area (14a) that communicates with the first heat-transfer-medium flow passage group (11) and a third area (14b) that communicates with the second heat-transfer-medium flow passage group (12),
an upper header tank (13) joined to upper end parts of the first heat-transfer-medium flow passage group (11) and the second heat-transfer-medium flow passage group (12) and having an inside used as a second area (13a) that communicates with the first heat-transfer-medium flow passage group (11) and the second heat-transfer-medium flow passage group (12),
a heat-transfer-medium inflow port (15) that supplies the heat transfer medium to the first area (14a), and
a heat-transfer-medium outflow port (17) from which the heat transfer medium collected to the third area (14b) flows out, and
the heat-transfer-medium inflow port (15) and the heat-transfer-medium outflow port (17) provided at a lower part of one side of the interior condenser (10).

2. The air conditioner (1, 100) according to claim 1, **characterized in that** the interior condenser (10) is disposed in the air passage (3) so as to form a lower diversion (3b) at a lower side.

3. The air conditioner (1, 100) according to claim 1 or 2, **characterized in that** the interior condenser (10) is a refrigerant radiator that exchanges heat between the air and a refrigerant,
the heat-transfer-medium inflow port (15) is a refrigerant inflow port, and
the heat-transfer-medium outflow port (17) is a refrigerant outflow port.

4. The air conditioner (1, 100) according to claim 1 or 2, **characterized in that** the interior condenser (10) is a hot-water radiator that exchanges heat between the air and hot water,
the heat-transfer-medium inflow port (15) is a hot-water inflow port, and
the heat-transfer-medium outflow port (17) is a hot-water outflow port.

5. The air conditioner (1, 100) according to any one of claims 1 to 4, **characterized in that** the door (20a) is an air mix door (20a) that adjusts a ratio of air flowing toward the interior condenser (10) and air flowing toward the upper diversion (3a), and
the driving mechanism (30) is an air mix door driving mechanism (30a) that drives at least the air mix door (20a).

6. The air conditioner (1, 100) according to any one of claims 1 to 4, **characterized in that** the air conditioning case (2) includes multiple air outlets (61, 62, 63) that blow out air passing through the interior condenser (10) or air bypassing the interior condenser (10) or both, toward an interior of the vehicle,
the air outlets (61, 62, 63) are respectively provided with air outlet doors (61D, 62D, 63D) that open and close the corresponding air outlets (61, 62, 63), and
the driving mechanism (30) is an air outlet door driving mechanism that drives one or more of the multiple air outlets (61, 62, 63).

7. The air conditioner (100) according to any one of claims 1 to 6, **characterized by** further comprising:
other side doors (120, 161D, 162D, 163D) disposed on the other side in the left-right direction of the vehicle, relative to a side on which the doors (20a, 61D, 62D, 63D) are disposed, in the air passage (3); and
an other side driving mechanism (130) disposed on the other side surface (2t) of the air conditioning case (2) in the left-right direction of the vehicle, to drive one or more of the other side doors (120a, 161D, 162D, 163D).

8. The air conditioner (1, 100) according to any one of claims 1 to 7, **characterized by** further comprising a blower (1A) that sends air to be flowed in the air passage (3), and
the blower (1A) is disposed on a side facing the other side surface (2t) of the air conditioning case (2).
